# EUROPÄISCHE PATENTSCHRIFT

(11) **EP 0 708 787 B1**
(45) Veröffentlichungstag und Bekanntmachung des Hinweises auf die Patenterteilung: **20.01.1999**
(21) Anmeldenummer: 94921621.2
(22) Anmeldetag: 23.06.1994
(51) Int. Cl.: C08F 10/00, C08F 4/69

(54) **VERFAHREN ZUR HERSTELLUNG VON HOMO- UND COPOLYMERISATEN VON ALK-1-ENEN**
PROCESS FOR PREPARING HOMO- AND COPOLYMERS OF ALK-1-ENES
PROCEDE DE PREPARATION D'HOMOPOLYMERES ET DE COPOLYMERES D'ALC-1-ENES

(30) Priorität: 10.07.1993 DE 4323192
(43) Veröffentlichungstag der Anmeldung: 01.05.1996
(73) Patentinhaber: BASF AKTIENGESELLSCHAFT, 67056 Ludwigshafen (DE)
(72) Erfinder: ROHDE, Wolfgang, D-67346 Speyer (DE); SAIVE, Roland, D-67071 Ludwigshafen (DE); GOERTZ, Hans-Helmut, D-67251 Freinsheim (DE); SCHWEIER, Guenther, D-67159 Friedelsheim (DE)
(86) Internationale Anmeldenummer: EP9402048
(87) Internationale Veröffentlichungsnummer: WO9501999

(56) Entgegenhaltungen:
- EP-A- 0 090 374
- US-A- 3 013 002
- US-A- 3 879 368
- US-A- 4 015 059

## Beschreibung

Die vorliegende Erfindung betrifft ein verbessertes Verfahren zur Herstellung von Polyalk-1-enen, insbesondere von Polyethylenen und Copolymerisaten des Ethylens mit C₃- bis C₁₀-Alk-1-enen durch Polymerisation von Alk-1-enen mit Hilfe der auf einem anorganischen oxidischen Träger adsorbierten Verbindung Bis(cyclopentadienyl)-chrom-II 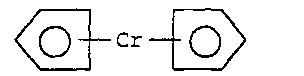 in welcher die Cyclopentadienylringe inerte organische Reste tragen können.

Weiterhin betrifft die Erfindung Fällungspolymerisate, die nach diesem Verfahren erhältlich sind.

Die Herstellung von Polyethylen sowie Copolymerisaten des Ethylens mit C₃- bis C₁₀-Alk-1-enen durch Polymerisation von Ethylen bzw. Gemischen von Ethylen und C₃- bis C₁₀-Alk-1-enen mit Hilfe von Trägerkatalysatoren aus einem anorganischen oxidischen Trägermaterial, insbesondere Siliciumdioxid und Bis(cyclopentadienyl)-chrom-II, das allgemein auch als Chromocen bezeichnet wird, ist aus der US-A 3 709 853 bekannt.

Weiterhin sind aus der US-A 3 879 368 Katalysatoren dieser Art bekannt, die mit Silanen oder Alkylsilanen vorbehandelt wurden.

Die EP-A-0 090 374 beschreibt Katalysatorsysteme in welchen Chromocenderivate auf einen phosphathaltigen Träger aufgebracht sind.

Ferner wird in der DE-A 36 34 534 die Polymerisation von Ethylen und Ethylen mit anderen Alk-1-enen mittels eines Siliziumdioxid/ Chromtrioxid-Trägerkatalysators und einem Lithiumalkyl empfohlen.

Die bei diesen Verfahren verwendeten Katalysatoren haben jedoch den Nachteil, daß sie zu Polymerisaten mit breiter Molekulargewichtsverteilung führen (DE-A 3 634 534) oder daß ihre Produktivität relativ gering ist (US-A 3 709 853), weswegen sie für großtechnische Verfahren nur bedingt geeignet sind. Demgemäß wurde ein verbessertes Verfahren zur Herstellung von Polyalk-1-enen durch Polymerisation von Alk-1-enen mit Hilfe der auf einem anorganischen, metalloxidischen Träger adsorbierten Verbindung Bis (cyclopentadienyl)-chrom-II 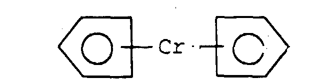 in welcher die Cyclopentadienylringe inerte organische Reste tragen können, gefunden, welches dadurch gekennzeichnet ist, daß man die Polymerisation in Gegenwart einer metallorganischen Verbindung eines Metalls der I. bis III. Hauptgruppe oder eines Hydrids dieser Metalle vornimmt, wobei der metalloxidische Träger nicht phosphathaltig ist, und die Behandlung des metalloxidischen Trägers mit Silanen ausgewählt aus der Gruppe bestehend aus Verbindungen der Formeln H₃Si-[-SiH₂-]ₘ-H und R₄₋ₙSiHₙ , wobei m und n eine ganze Zahl zwischen 0-3 und R eine Kohlenwasserstoffgruppe mit 1-10 Kohlenstoffatomen darstellen, ausgeschlossen ist.

Als aktive Komponente des Polymerisationskatalysators kommt in erster Linie das Bis(cyclopentadienyl)chrom-II in Betracht, daneben aber auch dessen Derivate, in denen die Cyclopentadienylgruppen C₁-C₆-Alkylgruppen und/oder C₆-C₁₅ Arylgruppen als Substituenten tragen. Weiterhin eignen sich anellierte Cyclopentadienylgruppen wie Inden und Fluoren, die ebenfalls mit den genannten Resten substituiert sein können.

Als Trägermaterialien sind Metalloxide wie die Oxide des Si, Al oder Zr geeignet, wobei Siliciumdioxid oder Mischoxide von Aluminium und Silicium bevorzugt sind. Die Herstellung derartiger Träger ist z.B. in der DE-A 36 34 534 beschrieben. Diese Träger sollen vorzugsweise eine hohe innere Oberfläche von ca. 50 bis 1000 m²/g aufweisen, damit das adsorbierte Chromocen eine möglichst hohe Kontaktfläche zum Olefin hat. Der mittlere Porendurchmesser liegt im Bereich von 1 bis 100 nm. Ein besonders bevorzugtes handelsübliches Produkt ist z.B. das Silica Gel 332 der Fa. Grace.

Vor der Beladung mit dem Chromocen müssen die Trägermaterialien aktiviert werden, um adsorbiertes Wasser zu entfernen. Hierzu werden sie in einer Inertgasatmosphäre ca. 1 bis 30 Stunden auf 200 bis 900°C erhitzt.

Zur Beladung des Trägers mit der aktiven Komponente sind mehrere Techniken beschrieben.

So kann die Beladung des getrockneten Trägermaterials durch Sublimation erfolgen. Hierzu werden Chromocen und Trägermaterial in einer inerten Atmosphäre gemischt und anschließend wird der Druck soweit reduziert, daß das Chromocen verdampft und auf dem Trägermaterial adsorbiert wird.

Der Trägerkatalysator kann auch in der Weise hergestellt werden, daß man das Chromocen zunächst in einem Lösungsmittel löst und die Lösung mehrere Stunden lang auf das Trägermaterial einwirken läßt. Geeignete Lösungsmittel sind Kohlenwasserstoffe wie Pentan, n-Hexan, Cyclohexan, Benzol und Xylol. Die Lösungsmittelmenge ist so zu bemessen, daß das Trägermaterial vollständig benetzt wird. Falls ein pulverförmiges Produkt gewünscht wird, werden die Lösungsmittel aus der Suspension entfernt.

Die Menge an Chrom im Trägerkatalysator beträgt in der Regel 0,1 bis 10 Gew.-%, bezogen auf das Tragermaterial.

Polymere, die nach dem erfindungsgemäßen Verfahren hergestellt werden können, sind vor allem Polyethylen sowie Copolymerisate des Ethylens mit C₃- bis C₁₀-, bevorzugt mit C₃- bis C₆-Alk-1-enen. Daneben eignet sich das Verfahren auch zur Copolymerisation der anderen definitionsgemäßen Alk-1-ene.

Die Menge am Alk-1-en, bezogen auf die eingesetzte Menge am Trägerkatalysator, liegt zwischen 100 und 10 000 g/g, bevorzugt zwischen 1 000 und 20 0000 g/g.

Kennzeichnendes Merkmal des erfindungsgemäßen Verfahrens ist, daß bei der Polymerisation der Alk-1-ene zusätzlich zu den Chromocen-Trägerkatalysatoren ein Metallhydrid oder eine Organometallverbindung eingesetzt wird, wobei das Metall der Organometallverbindung zur I. bis III. Hauptgruppe gehört.

Die Organometallverbindungen und Metallhydride enthalten Metalle der I. bis III. Hauptgruppe. Neben Lithium als Metall kommen Natrium, Kalium, Beryllium, Magnesium, Calcium, Barium, Bor und Aluminium in Betracht.

Bei den Organometallverbindungen sind die Metallalkyle und Metallaryle bevorzugt. Als Kohlenwasserstoffreste kommen aliphatische Reste mit 1 bis 6 Kohlenstoffatomen sowie aromatische Reste mit 6 bis 15 Kohlenstoffatomen in Betracht. Besonders bevorzugt sind hierbei die Lithiumverbindungen, z.B. n-Butyllithium, sec.-Butyllithium und Phenyllithium.

Geeignete Metallhydride sind z.B. das Natrium- und Calciumhydrid, gemischte Hydride wie das Lithiumaluminiumhydrid und das Natriumborhydrid sowie die Borwasserstoffe.

Das Mengenverhaltnis des erfindungsgemäß zu verwendenden Metallorganyls oder Metallhydrids zum Chromocenkatalysator beträgt vorzugsweise 0,1 bis 100, besonders bevorzugt 1 bis 20 Äquivalente des Metalls pro Mol Chrom. Es ist vorteilhaft, wenn man das Verhaltnis während des gesamten Polymerisationsvorganges durch entsprechende Zugabe des Metallorganyls oder Metallhydrids aufrechterhält.

Verfahrenstechnisch kann kann man hierbei wie üblich vorgehen, wie es z.B. in "Ullmanns Encyklopädie der technischen Chemie", Band 19, 4. Auflage beschrieben ist.

Bevorzugt wird die Fällungspolymerisation in einem Lösungsmittel, in welchem die Monomeren, nicht aber das Polymere löslich sind. Geeignete Lösungsmittel sind insbesondere aliphatische Kohlenwasserstoffe, wie vor allem C₄- bis C₁₀-Alkane.

Zur Vermeidung einer Belagbildung an den Reaktorwänden können die üblichen Antistatika eingesetzt werden. Hierbei handelt es sich z.B. um Mischungen aus Chrom-alkylsalicylaten, Calciumsalzen eines Sulfonsäuregruppen tragenden Bernsteinsäuredioctyl- oder Bernsteinsäuredidecylesters und den ionomeren Copolymeren von Ethylenimin mit ungesättigten Carbonsäuren, wie sie z.B. in der DE-A 23 02 962 beschrieben sind.

Bei der Fällungspolymerisation in Anwesenheit von n-Butyllithium erhält man das Polymere in Form feiner Teilchen, die nach Entfernung des Lösungsmittels unerwarteterweise eine höhere Schüttdichte aufweisen als Fällungspolymerisäte, die nach vorbekannten Methoden, z.B. derjenigen der US-PS 3 709 853 erhältlich sind. Diese Polymerisate haben den Vorteil, daß sie ohne weitere Granulierung zur Herstellung von Formteilen eingesetzt werden können.

Das erfindungsgemäße Verfahren bietet allgemein den Vorteil einer besonders hohen Produktivitat, d.h. für die Herstellung einer bestimmten Menge am Polymeren benötigt man weniger Katalysator als bisher. Dies beruht vermutlich darauf, daß die erfindungsgemaßen zu verwendenden Zusatzstoffe H-aktive oder oxidierend wirkende Verunreinigungen abfangen und somit den empfindlichen Katalysator schützen.

### Beispiele

### A. Herstellung von Trägerkatalysatoren für die kontinuierliche Polymerisation

In einer Lösung von 3,5 g Bis(cyclopentadienyl)chrom-II in 500 ml n-Heptan wurden 100 g des oben beschriebenen Trägermaterials suspendiert. Die Suspension wurde 8 Stunden gerührt und anschließend direkt eingesetzt.

Ein weiterer Trägerkatalysator, der mit der doppelten Menge an Bis(cyclopentadienyl)chrom-II beladen war, wurde hergestellt, indem nach der obigen Vorschrift vorgegangen wurde, jedoch eine Lösung von 7,0 g Bis(cyclopentadienyl)chrom-II in 500 ml n-Heptan eingesetzt wurde.

### B. Herstellung eines Trägerkatalysators für die diskontinuierliche Polymerisation

In einer Lösung von 1,04 g Bis(cyclopentadienyl)chrom-II in 200 ml n-Heptan wurden 15 g eines bei 800°C 24 Stunden lang calcinierten Kieselgels (SG 332 der Fa. Grace) mit einer Teilchengröße von 20 bis 45 µm, einer spezifischen Oberfläche von 320 m²/g und einem Porenvolumen von 1,75 ccm/g) suspendiert. Nach zweistündigem Rühren bei Raumtemperatur wurde das Trägermaterial abfiltriert, mit n-Heptan gewaschen und bei Raumtemperatur im Vakuum zu einem rieselfähigen Pulver getrocknet.

### Beispiel 1 (erfindungsgemäß)

### Kontinuierliche Polymerisation

In einem 200 l-Schleifenreaktor mit geschlossenem Umlauf wurde in Isobutan als Lösungsmittel kontinuierlich Ethylen bei einer Temperatur von 88°C und einem Druck von 40 bar polymerisiert, wobei während der gesamten Versuchsdauer eine Ethylen-Konzentration von 18 Vol.-% aufrecht erhalten wurde. In den Reaktor wurde zusätzlich jeweils eine konstante Menge von 15 l/h Wasserstoff und 0,14 g/h eines Antistatikums eingeleitet. Bei einer konstanten Zugabe von 2,8 g/h eines mit 1 Gew.-% Chrom beladenen Chromocen/SiO₂-Tragerkatalysators (entsprechend 0,5·10⁻³ mol Cr/h) 0,1 g/h n-Butyllithium (1,5·10⁻³ mol/h) in den Reaktor wurden 19 kg/h Polyethylen erhalten, was einer Produktivität von 6800 g Polyethylen bezogen auf 1 g Katalysator entspricht. Das gewonnene Polyethylen hatte eine Schüttdichte von 440 g/l (bestimmt nach DIN 53 468).

### Beispiel 1V/1 (zum Vergleich)

Dieser Versuch unterscheidet sich von Beispiel 1 darin, daß die zugegebene Chromocen/SiO₂-Trägerkatalysator-Menge, beladen mit 1 Gew.-% Chrom, auf 5,6 g/h (entsprechend 1,1·10⁻³ mol Cr/h) erhöht wurde, jedoch kein n-Butyllithium zugegeben wurde. Es wurden 14 kg/h Polyethylen erhalten, was einer Produktivität von 2 500 g Polyethylen bezogen auf 1 g Katalysator entspricht. Das gewonnene Polyethylen hatte eine Schüttdichte von 360 g/l (bestimmt nach DIN 53 468).

### Beispiel 1V/2 (zum Vergleich)

Dieser Versuch unterscheidet sich von Beispiel 1 darin, daß der Chromocen/SiO₂-Trägerkatalysator mit der doppelten Menge Chrom (2 Gew.-% Chrom) beladen war und kein n-Butyllithium zugegeben wurde. Es wurden 23 kg/h Polyethylen erhalten, was einer Produktivität von 6 600 g Polyethylen bezogen auf 1 g Katalysator entspricht. Das gewonnene Polyethylen hatte eine Schüttdichte von 375 g/l (bestimmt nach DIN 53 468).

### Beispiele 2-5

### Diskontinuierliche Polymerisation (erfindungsgemäß)

In einem 1 l-Autoklaven wurden unter Argon 400 ml trockenes und mit Argon gespültes Heptan vorgelegt und mit einer einmolaren Lösung von Butyllithium in Heptan versetzt. Danach wurde bei 70°C 0,2 bar Wasserstoff und 30 bar Ethylen zu einem Gesamtdruck von 30 bar aufgepreßt, und anschließend wurden 100 mg (3,8·10⁻² mmol Cr) des Chromocen/SiO₂-Trägerkatalysators in den Autoklaven eingetragen, worauf die Polymerisation des Ethylens sofort einsetzte. Bei einer konstanten Temperatur von 70°C wurde der Druck von 30 bar 90 Minuten lang aufrecht erhalten, wonach die Polymerisation durch Entspannen des Autoklaven abgebrochen und das Heptan aus der entstandenen Suspension abgedampft wurde.

Dieser Versuch wurde in den Beispielen 2 bis 5 mit unterschiedlichen Partialdrücken Wasserstoff und Mengen an Butyllithium sowie mit Aluminiumtriethyl (ATE) anstelle des Butyllithiums abgewandelt (siehe Tabelle 1).

Die Ergebnisse dieser Versuche sind der Tabelle zu entnehmen.

| | Beispiel | | | |
|---|---|---|---|---|
| | 2 | 3 | 4 | 5 |
| Butyllithium [mg] | 40 | 30 | - | - |
| Aluminiumtriethyl [mg] | - | - | 30 | 30 |
| H₂-Druck [bar] | 0,2 | 0,5 | 0,2 | 0,5 |
| Produktivität¹⁾ | 2,5 | 1,2 | 1,5 | 1,2 |
| Schüttdichte [g/l] | 390 | 360 | 315 | 300 |

| | | | | |
|---|---|---|---|---|
| ¹⁾ kg Polymeres pro g Katalysator | | | | |

## Patentansprüche

1. Verfahren zur Herstellung von Polyalk-1-enen durch Polymerisation von Alk-1-enen mit Hilfe der auf einem anorganischen, metalloxidischen Träger adsorbierten Verbindung Bis(cyclopentadienyl)chrom-II 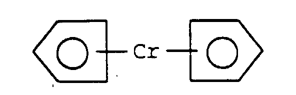 in welcher die Cyclopentadienylringe inerte organische Reste tragen können, dadurch gekennzeichnet, daß man die Polymerisation in Gegenwart einer metallorganischen Verbindung eines Metalls der I. bis III. Hauptgruppe oder eines Hvdrids dieser Metalle vornimmt, wobei der metalloxidische Träger nicht phosphathaltig ist, und die Behandlung des metalloxidischen Trägers mit Silanen ausgewählt aus der Gruppe bestehend aus Verbindungen der Formeln H₃Si-[-SiH₂-]ₘ-H und R₄₋ₙSiHₙ, wobei m und n eine ganze Zahl zwischen 0-3 und R eine Kohlenwasserstoffgruppe mit 1-10 Kohlenstoffatomen darstellen, augeschlossen ist.

2. Verfahren nach Anspruch 1, dadurch gekennzeichnet, daß man als metallorganische Verbindung eine Kohlenwasserstoff-Lithium-Verbindung verwendet.

3. Verfahren nach Anspruch 2, dadurch gekennzeichnet, daß man als Kohlenwasserstoff-Lithium-Verbindung n-Butyllithium verwendet.

4. Verfahren nach den Ansprüchen 1 bis 3, dadurch gekennzeichnet, daß man es auf die Polymerisation von Ethylen oder dessen Gemischen mit einem oder mehreren C₃- bis C₁₀-Alk-1-enen anwendet.

5. Verfahren nach den Ansprüchen 1 bis 4, dadurch gekennzeichnet, daß man die Polymerisation nach der Methode der Fällungspolymerisation vornimmt.

## Claims

1. A process for the preparation of a polyalk-1-ene by polymerization of an alk-1-ene with the aid of the compound bis(cyclopentadienyl)chromium(II) 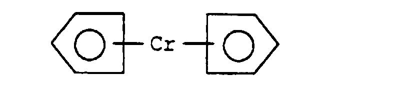 in which the cyclopentadienyl rings may carry inert organic radicals, said compound being adsorbed on an inorganic, metal oxide carrier, wherein the polymerization is carried out in the presence of an organometallic compound of a metal of main groups I to III or of a hydride of these metals, the metal oxide carrier not containing phosphate, and the treatment of the metal oxide carrier with silanes selected from the group consisting of compounds of the formulae H₃Si-[-SiH₂-]ₘ-H and R₄₋ₙSiHₙ, m and n being an integer between 0-3 and R being a hydrocarbon group having 1-10 carbon atoms, being excluded.

2. A process as claimed in claim 1, wherein the organometallic compound used is a hydrocarbon-lithium compound.

3. A process as claimed in claim 2, wherein the hydrocarbon-lithium compound used is n-butyllithium.

4. A process as claimed in any of claims 1 to 3, which is used for the polymerization of ethylene or of a mixture thereof with one or more C₃-C₁₀-alk-1-enes.

5. A process as claimed in any of claims 1 to 4, wherein the polymerization is carried out by the precipitation polymerization method.

## Revendications

1. Procédé de préparation de polyalc-1-ènes par polymérisation d'alc-1-ènes à l'aide d'un composé bis(cyclopentadiényl)chrome-II 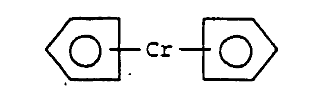 adsorbé sur un support minéral en oxyde métallique, dans lequel les cycles cyclopentadiényle peuvent porter des restes organiques inertes, caractérisé en ce que l'on effectue la polymérisation en présence d'un composé organométallique d'un métal des groupes IA à IIIA de la classification périodique des éléments ou d'un hydrure de ces métaux, où le support en oxyde métallique ne contient pas de phosphate et le traitement du support en oxyde métallique avec des silanes choisis dans le groupe formé par les composés de formules H₃Si-[-SiH₂-]ₘ-H et R₄₋ₙSiHₙ, dans lesquelles m et n sont des nombres entiers entre 0 et 3 et R est un groupement hydrocarboné à 1-10 atomes de carbone, est exclu.

2. Procédé selon la revendication 1, caractérisé en ce que l'on utilise un composé hydrocarbure/lithium en tant que composé organométallique.

3. Procédé selon la revendication 2, caractérisé en ce que l'on utilise du n-butyllithium en tant que composé hydrocarbure/lithium.

4. Procédé selon l'une quelconque des revendications 1 à 3, caractérisé en ce qu'on l'utilise pour la polymérisation de l'éthylène ou de ses mélanges avec un ou plusieurs alc-1-ènes en C₃-C₁₀.

5. Procédé selon l'une quelconque des revendications 1 à 4, caractérisé en ce que l'on effectue la polymérisation selon le procédé de polymérisation par précipitation.
